(19) Europäisches Patentamt / European Patent Office / Office européen des brevets

(11) **EP 3 382 570 A1**

(12) **EUROPEAN PATENT APPLICATION**

(43) Date of publication:
03.10.2018 Bulletin 2018/40

(51) Int Cl.:
*G06F 17/18* (2006.01)        *B60W 40/09* (2012.01)
*B60W 40/10* (2012.01)        *G01P 15/00* (2006.01)
*G06N 3/04* (2006.01)         *H04W 4/02* (2018.01)

(21) Application number: 17382150.5

(22) Date of filing: 27.03.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: **Telefonica Digital España, S.L.U.**
**28013 Madrid (ES)**

(72) Inventors:
• **HERNÁNDEZ SÁNCHEZ, Sara**
**28013 MADRID (ES)**

• **SERRANO ROMERO, Javier**
**28013 MADRID (ES)**
• **FERNÁNDEZ POZO, Rubén**
**28013 MADRID (ES)**
• **HERNÁNDEZ GÓMEZ, Luis Alfonso**
**28013 MADRID (ES)**
• **BERNAT VERCHER, Jesus**
**28013 MADRID (ES)**

(74) Representative: **Herrero & Asociados, S.L.**
**Cedaceros, 1**
**28014 Madrid (ES)**

(54) **METHOD FOR CHARACTERIZING DRIVING EVENTS OF A VEHICLE BASED ON AN ACCELEROMETER SENSOR**

(57)    Present invention refers to a method and system for characterizing a driving event of a vehicle based on tri-axial accelerometer signals provided by an accelerometer sensor of a mobile communication device located in the vehicle, the method comprising: assigning, by a neural network, a probability that a detected driving event belongs to a certain driving maneuver type, based on the tri-axial accelerometer signal; classifying the detected driving event as said certain driving maneuver type; obtaining a direction vector associated to each plurality of driving maneuvers of the same type; checking whether the certain driving maneuver type classified matches with the corresponding direction vector of the plurality of driving maneuvers of said type; and if not, reclassifying the detected driving event.

EP 3 382 570 A1

**Description**

**TECHNICAL FIELD OF THE INVENTION**

Present invention generally relates to monitoring systems and more specifically relates to driving characterization systems, based on accelerometer sensors embedded in common smartphones, through deep learning techniques.

**BACKGROUND OF THE INVENTION**

Nowadays, most people have smartphones which, at least, are equipped with embedded low-cost sensors, such as accelerometers, GPS, gyroscopes, magnetometers or barometers that allow the development of new applications related to activity recognition which, through processing of sensor data, identify the activities the user is involved on.

Most of the applications have been guided to monitoring human movement or to driver characterization for autonomous driving. Among them, those directed to the identification of driver styles or driving behavior are attracting attention and investment for developing new services based on assessing the condition of the driver. Thus, several applications are being proposed in different fields, as vehicle fleet monitoring or insurance companies, or for specific applications such as drunk-driving detection or inefficient and unsafe driving behavior.

Prior art offers some works related to characterization of driver behavior using deep learning techniques, which use processed data obtained from several sensors and devices mentioned before. Then, resulting statistical feature can be input to deep neural networks, although they do not relay on the benefits of current advances of novel deep learning architectures. Other works are more oriented to automotive control of the vehicle characterizing drivers through their operation and characteristic behavior, while some others works are focused on automatic recognition of the behavior and environmental context of a person with the sensors built into smartphones and smartwatches.

It is also possible to find documents related to vehicle control systems. Namely, there are works disclosing adaptive vehicle control systems, providing driver assistance. In order to do it, driving styles and behaviors are classified. These systems employ several sensors incorporated in the car and, in order to classify driving styles, it is necessary to process those signals from the sensors and also information regarding traffic and road conditions.

Therefore, prior art can provide some solutions dealing with the task of classifying different types of activity events, but most of the existing proposals require the use of a large number of sensors or extra hardware like a CAN bus, hand-wheel angle sensors, yaw rate sensors, light detection radars, cameras or brake pedal sensors among others. Even when mobile phones are used as data collection devices, sensors such as gyroscopes, barometers, GPS or microphones are necessarily processed.

However, the aforementioned solutions from prior art involve some undesirable disadvantages. For example, some existing proposals for the characterization of the driver behavior need vehicle state information and additional hardware, such as vehicle speed, yaw rate, lateral and longitudinal accelerations, steering angle, steering angle velocity, brake pedal position and, acceleration pedal position, and others relative to a certain test maneuver. Many works need to perform a pre-processing of the data, instead of working with the raw data directly. Applications that use smartphones to characterize driving styles utilize gyroscopes and GPS, among other sensors, face a double problem: on the one hand, many of the new smartphones do not include gyroscope sensors (gyroscopes are becoming limited to high range or middle-high range mobile phones, by reason of cost and space); and on the other hand, the use of GPS decreases quickly the life of the battery, which may lead to a rejection of the user for using this type of applications. Moreover, many proposals require a fixed placement for the mobile phone, or it is assumed that the device is fixed-aligned according to the vehicle reference coordinate system. The requirement of placing the smartphone in a fixed position during a trip is also an important limitation for the usability and acceptability of the system. As this is a hard requirement to be met by the users, the accuracy of this kind of solutions is highly compromised.

There is also an interest in reducing the number of sensors to be processed, which not only comes from saving battery consumption, but also because many new smartphones, do not include some of the sensors mentioned above by reason of saving space and costs.

Therefore, prior art is then missing a solution to these problems, where users of any smartphone may take advantage of their smartphones for obtaining valuable information of driving events without paying in return a big loss of battery or other limitations in terms of mobility. A flexible method to detect driving events based on the smartphone of the user travelling in a vehicle would be then a valuable contribution.

**SUMMARY OF THE INVENTION**

Present invention solves the aforementioned problems taking advantage of novel deep learning architectures, such as Long Short Term Memory (LSTM) networks. Thus, driving maneuvers can be predicted having only information provided by tri-axial accelerometer sensors commonly embedded on a smartphone placed inside of the vehicle. It is presented a method for characterizing a driving event of a vehicle, wherein a tri-axial accelerometer signal is provided by an accelerometer sensor of a mobile communication device located in the vehicle and wherein driving events are detected based on the tri-axial accelerometer signal, the method is characterized by comprising the steps of:

a) assigning, by a neural network, a probability that the detected driving event belongs to a certain driving maneuver type from a set of driving maneuver types, based on the tri-axial accelerometer signal;
b) classifying the detected driving event as said certain driving maneuver type from the set of driving maneuver types, according to the probability assigned;
c) obtaining a direction vector associated to each plurality of driving maneuvers of the same type classified from detected driving events within a certain period of time;
d) checking whether the certain driving maneuver type classified on step b) matches with the corresponding direction vector of the plurality of driving maneuvers of said type;
e) if the certain driving maneuver type does not match with the corresponding direction vector, reclassifying the detected driving event as a different driving maneuver type from the set of driving maneuver types.

In one embodiment of the invention, the set of driving maneuver types comprises acceleration maneuvers and turn maneuvers.

The neural network may be a trained neural network, comprising the step of providing the neural network with a database of tri-axial accelerometer signals matching with labeled driving maneuver types. Specifically, according to one particular embodiment of the invention, labeling driving maneuver types comprises: obtaining a set of tri-axial accelerometer signals and gyroscope signals associated to a moving vehicle; detecting driving events based on the plurality of accelerometer signals; determining whether the gyroscope signal associated to each detected driving event reaches a previously established energy threshold; and labeling each detected driving event as a turn maneuver or as an acceleration maneuver, based on the previous step.

The neural network may be a long short time memory network (LSTM)

According to one embodiment of the invention, obtaining the direction vector associated to each plurality of driving maneuvers of the same type comprises the steps of: obtaining a direction vector for each driving maneuver of the same type based on the tri-axial accelerometer signals provided during a certain period of time; clustering obtained direction vectors based on a certain maximum separation angle; and determining the direction vector associated to each plurality of driving maneuvers of the same type.

In one embodiment of the invention, it is considered that the step of determining the direction vector associated to each plurality of driving maneuvers of the same type complies that a direction vector associated to acceleration maneuvers and a direction vector associated to turn maneuvers are perpendicular.

Optionally, clustering direction vectors may comprises the steps of: obtaining all the angles between two direction vectors through scalar product between each direction vector and any other direction vector; selecting a direction vector having the largest angle; creating a sphere containing all the direction vectors, wherein the selected direction vector is the starting point from which the rest of direction vectors are arranged according to a minimum angle criteria; and clustering direction vectors separated less than a maximum angle previously established.

Additionally, according to one embodiment of the invention, the step of determining the direction vector associated to each plurality of driving maneuvers of the same type comprises: counting the number of direction vectors of each cluster; selecting the cluster having the biggest number of direction vectors; and obtaining the mean of the direction vectors contained in the selected cluster.

Optionally, present invention may further comprise, according to one particular embodiment, obtaining a final driving direction vector by further comprising the steps of: selecting a set of classified and reclassified acceleration maneuvers within a certain period of time; subtracting the effect of gravity; and obtaining a final driving direction vector as an average of the selected set of classified and reclassified acceleration maneuvers which have been subtracted the effect of gravity.

In one embodiment of the invention, the certain period of time is determined by the movement of the vehicle, specifically the period of time starts when the vehicle starts moving and it ends when the vehicle stops. Thus, data are collected from a whole driving journey, which refers to a typical driving trip or route.

The triaxial accelerometer signal may be a raw accelerometer signal. According to different embodiments of the invention, the raw accelerometer signal may provided to the neural network without any prior preprocessing or it may be processed through at least one of the following techniques: subtracting the effect of the gravity to the raw accelerometer signal; inputting the raw accelerometer signal in a convolutional neural network; and adding a signal derived from a virtual gyroscope to the raw accelerometer signal.

A second aspect of the invention refers to a system with a neural network for characterizing a driving event of a vehicle, the system comprising a mobile communication device with an accelerometer sensor configured for providing a triaxial accelerometer signal, wherein the mobile communication device is configured for detecting driving events based on the tri-axial accelerometer signal; assigning, through the neural network, a probability that the detected driving event belongs to a certain driving maneuver type from a set of driving maneuver types; classifying the detected driving event as said certain driving maneuver type from the set of driving maneuver types, according to the probability assigned; obtaining a direction vector associated to each plurality of driving maneuvers of the same type classified from detected driving events within a certain period of time; checking whether the certain driving maneuver type classified matches with the corresponding direction vector of the plurality of driving maneuvers of said type; and if the certain driving maneuver type does not match with the corresponding direction vector, reclassifying the detected driving event as a different driving maneuver type from the set of driving maneuver types.

The communication mobile device, according to one embodiment of the invention, is a smartphone.

A final aspect of the invention refers to a computer program product comprising computer program code adapted to perform the method of the invention when said program code is executed on a computer, a digital signal processor, a field-programmable gate array, an application-specific integrated circuit, a micro-processor, a micro-controller, or any other form of programmable hardware.

Therefore, present invention involves several advantages. For example, it is proposed only the use of tri-axial accelerometer sensors included in wide-ranging smartphones, which represents less important energy consumption. Moreover, although different ways of working with the input data can be managed by present invention, it is particularly advantageous the embodiment based on analysis of raw data directly, which makes the performance simpler and less expensive computationally.

Additionally, present invention proposes that the smartphone is not required to be placed at a fixed position, but it can be carried in a free position, the most usual for the driver, without prejudice to accuracy. Indeed, in order to overcome such important limiting factor, present invention has chosen deep learning as reference technique for characterizing general driving maneuvers for the reason that internal layers in the neural networks can extract discriminative features independent to the mobile position. Therefore present invention takes advantage of using Long Short Term Memory (LSTM) networks, which have already been used for common activities recognition, but not specifically for driving characterization using only tri-axial accelerometer signals. Thus, a categorization of typical maneuvers of driving is realized by means of these techniques, distinguishing between accelerations and turns, although it can be extended to a greater number of categories such as accelerations or braking, turns or roundabouts and potholes among others. In addition, a probability measure for each re-classified maneuver along a driving journey is also provided. Once driving maneuvers are characterized, an estimation of driving directional vector is also obtained allowing identifying for example the phone position inside the vehicle.

## DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a drawing wherein, by way of illustration and not restrictively, the following has been represented:

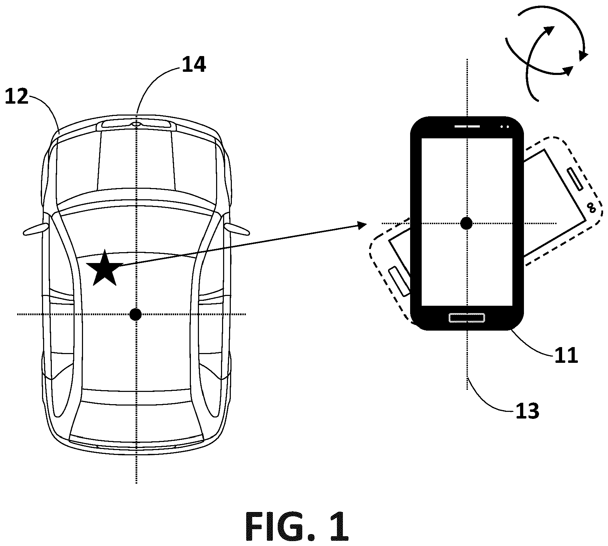

**Figure 1.-** shows a general view of present invention comprising a mobile communication device with its own reference system, which can be located in any position inside the vehicle, which also has its own reference system.

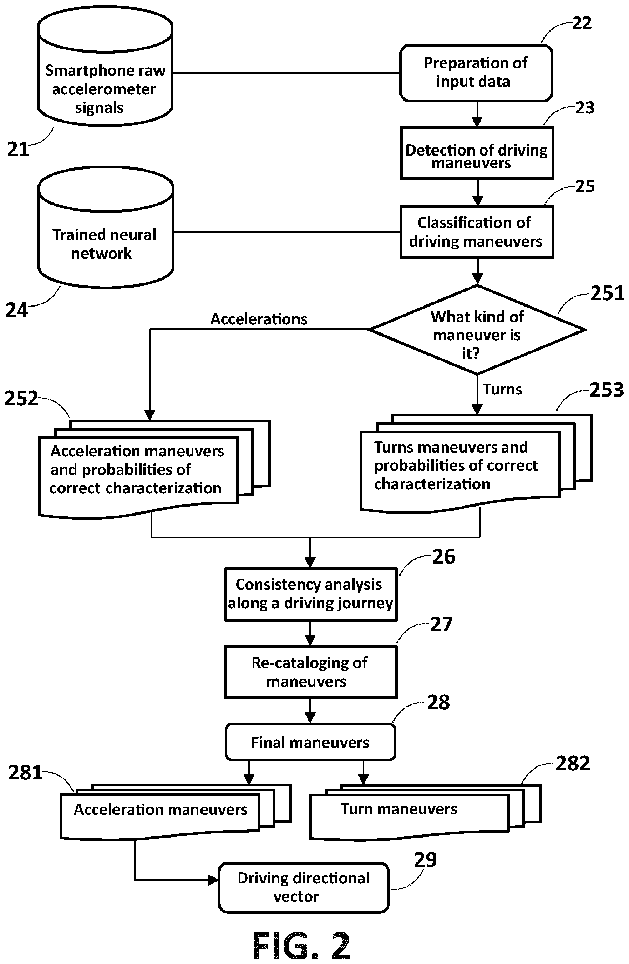

**Figure 2.-** shows a block diagram of the procedure for the characterization of driving maneuvers and a final step for the estimation of a driving directional vector.

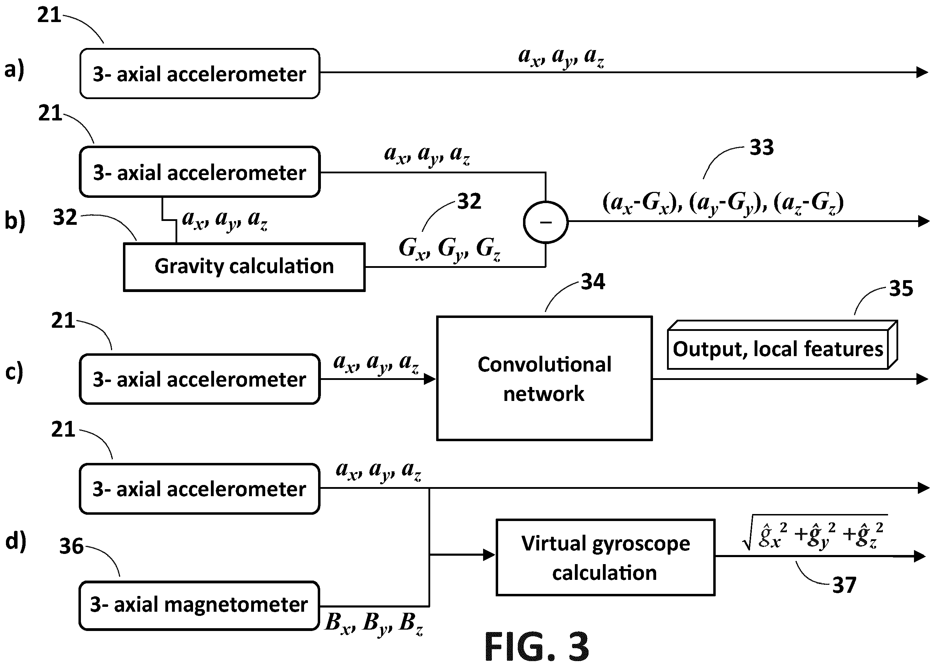

**Figure 3.-** shows different embodiments regarding possible input data for the neural network.
**Figure 4.-** shows the process to train a deep learning neural network.
**Figure 5.-** shows a neural network employed by a particular embodiment of present invention.
**Figure 6.-** shows a particular embodiment of a consistency analysis carried out by present invention.
**Figure 7.-** shows a particular embodiment of the invention, where the minimum sphere which initially contains all the vectors derived from classified driving maneuvers, step by step, it ends up providing a final direction.
**Figure 8.-** shows a block diagram of the process for estimating a final driving directional vector.

## DETAILED DESCRIPTION OF THE INVENTION

The matters defined in this detailed description are provided to assist in a comprehensive understanding of the invention. Accordingly, those of ordinary skill in the art will be aware of minor changes and modifications of the embodiments described herein. Also, description of well-known functions and elements are omitted for clarity and conciseness.

Of course, the embodiments of the invention can be implemented in a variety of architectural platforms, operating and server systems, devices, systems, or applications. Any particular implementation presented herein is provided for purposes of illustration and comprehension only and is not intended to limit aspects of the invention.

Present invention is related to the prediction of driving maneuvers through deep learning techniques, having only input source information provided by tri-axial accelerometers sensors included in a smartphone, which should be inside the vehicle, but it can be at any free position. By means of these techniques, a categorization of typical maneuvers of driving is realized, distinguishing between accelerations and turns, although it can be extended to a greater number of categories such as accelerations or braking, turns or roundabouts and potholes among others. Once driving maneuvers are characterized, an estimation of driving directional vector is also obtained allowing identifying for example the phone position inside the vehicle.

The invention describes a process for obtaining significant driving events from a complete vehicle journey. In one embodiment of the invention, acceleration signals from accelerometer sensors embedded in a mobile communication device, as a smartphone, located in the vehicle (driver's pocket, glove compartment or any other location) are processed following a distributed processing scheme.

Some concepts involved with present invention are defined as follows:

- Turn events/maneuvers: when a vehicle is taking a camber curve there are three different forces acting on it:

  - one produced by the vehicle weight, $P = mg$ (m: mass of the vehicle, g: gravity), which is a vertical force generated as consequence of the gravitational field;
  - the friction force, produced by the contact between tire and pavement; and
  - the centrifugal force, $F_c = m \cdot v^2/R$, caused by the variation of the direction of the vehicle within a curve. For a same vehicle, this centrifugal force will vary depending on the speed at which it travels, v, and the radius of the curve, $R$.

  In one embodiment of present invention, when a vehicle is subjected to a centrifugal force, it will be qualified as a turn event or maneuver.

- Accelerations events/maneuvers: the vehicle is not subjected to a centrifugal force, only forces in the same direction as the movement, which may appear in the opposite direction or in the same direction (i.e. accelerations or decelerations / negative accelerations, respectively). This will be qualified as an acceleration maneuver.

- Gyroscopes: it refers to devices for measuring angular velocity of rotation movements, more specifically sensors installed in mobile phone devices which generate tri-axial gyro signals.

- Accelerometers: it refers to devices for measuring acceleration, in this particular case accelerometers installed in mobile devices which generate tri-axial signals.

- Driving directional vector: a vector in the smartphone (11) coordinates system (13) pointing at the vehicle (12) reference system (14). It is referred as a "driving directional vector" as it is useful to know the vehicle's motion direction.

- Driving journey: it refers to a typical driving trip or route, from vehicle starts movement to it stops.

¡**Error! No se encuentra el origen de la referencia.** shows a block diagram of the procedure for the characterization of driving maneuvers (28) and a final step for the estimation of a driving directional vector (29).

The input data for the algorithm are obtained from a smartphone (11), specifically smartphone raw accelerometer signals (21). Then, input data are provided to a processing module. According to one embodiment of the invention, data can be preprocessed (22) at the processing module, in order to be prepared before inputting to the neural network (24), but according to another embodiment of the invention, the neural network input data can be just tri-axial raw accelerometer signals (21), with no need for any prior pre-processing (¡**Error! No se encuentra el origen de la referencia. part a**).

In one embodiment of the invention, input data are preprocessed according to ¡**Error! No se encuentra el origen de la referencia. part b**. Depending on the position in which the mobile phone (11) is inside the vehicle (12), the effect of gravity (32) will be taken by one or more of accelerometers components. Even though the deep learning network could characterize maneuvers independently of such distribution of gravity forces among the axes, the accelerometer signals (21) with the effect of the gravity (32) subtracted (33) can be also utilized.

In one embodiment of the invention, input data are preprocessed according to ¡**Error! No se encuentra el origen de la referencia. part c.** Data from raw accelerometers (21) can also be use as input to another common type of deep neural network known as Convolution Neural Network (CNN) (34), CNN will act as a feature extractor to generate local features (35) for being then used as inputs to a another network such as Long-Short Time Memory (LSTM) network.

In one embodiment of the invention, input data are preprocessed according to ¡**Error! No se encuentra el origen de la referencia. part d.** Signals derived from a virtual (i.e. software derived) gyroscope (37) are used. Virtual gyroscopes can be obtained by processing accelerometers and magnetometers signals (36). Being the gyroscope a component that is being limited to high range mobile phones or middle-high range devices, using virtual gyroscopes could be a good alternative. However the noisy characteristics of magnetometers, in particular inside vehicles with some sources of magnetic noise, make them hard to be used in this invention.

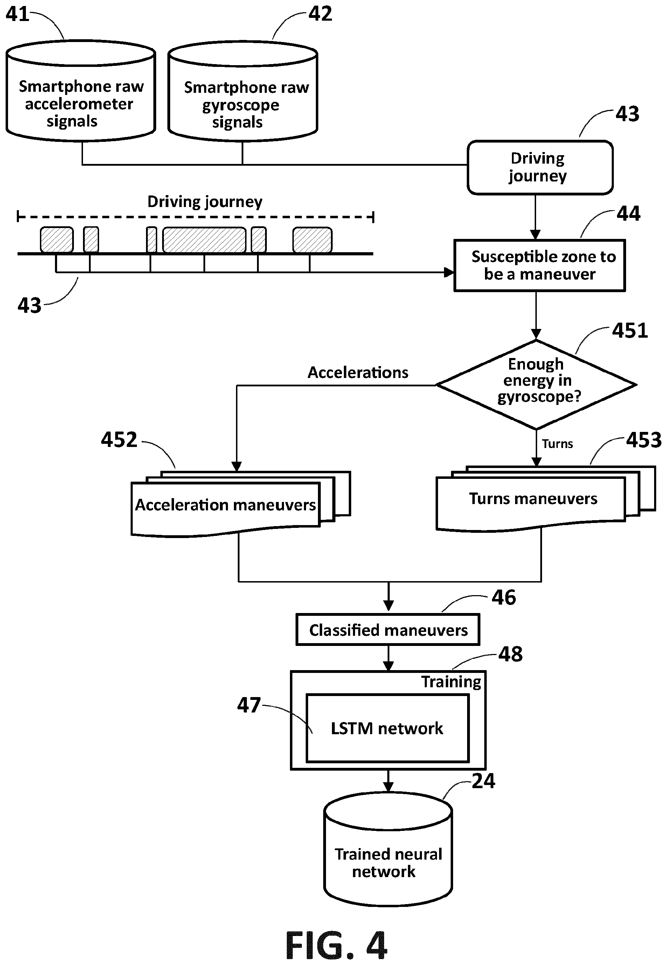

Once the input data are provided to the processing module, driving maneuvers are detected (23), for example following the teachings of the European Patent application "*Method for detecting driving events of a vehicle based on a smartphone*" (EP2975867) and then, the detected driving maneuvers are classified by a trained neural network (24). **Figure 4** shows this process, where the first step is to train a deep learning neural network (48). In order to do it, it is necessary a database including a large set of tri-axial accelerometer signals labeled (46) with matching driving maneuvers. This embodiment only considers two types of driving maneuvers, accelerations (451) and turns maneuvers (452); but many more could be also taken into account. A crucial issue to a right training deep learning networks (48) is to have access to a very large data set of accelerometer signals labeled (46) with their corresponding maneuver type (i.e. acceleration or turn). To generate such a large dataset this embodiment implements a procedure based on a huge data set of driving journeys (43) where both tri-axial accelerometer (41) and gyroscope signals (42) are recorded. The availability of both accelerometer (41) and gyroscope (42) signals in this dataset allows the labeling of maneuvers in acceleration (452) and turn maneuvers (453). Once this classification process is accomplished (46) gyroscope signals (42) are discarded and only signals coming from accelerometers (41) are employed to train the deep learning neural network. In some sense, it could be stated that the deep learning network is trained to infer the information enclosed in the missing gyroscope signals (436) when only input accelerometer signals (41) can be used.

Specifically, according to one embodiment of the invention, classified maneuvers by the training net comprise, for a driving journey (43), recording tri-axial signals of accelerometers (41) and gyroscopes (42). Then, capturing accelerations signals with accelerometer sensors and capturing angular velocity of an eventual turn with gyroscope sensors. One of the main differences is that the accelerometer is gravity-dependent while the gyroscope not. Besides accelerometers cannot measure accelerations in fall or rotation speed on a certain axis. Thus, accelerometers will be used to detect time windows where not only the gravity effect (32) contributes to the measured acceleration and therefore, it is susceptible to be a driving maneuver (44). And afterwards it will be evaluated (451), if it is an acceleration maneuver (452) or a turn maneuver (453) analyzing the information recorded by the gyroscope, for example based on whether there is enough energy in the gyroscope.

Once the database is constructed (46), the neural network (47) is trained (48), which is able to classify maneuvers (25, 251) as accelerations (252) or turns (253) giving as input only the tri-axial raw accelerometers signals (21). According to one embodiment of the invention, the trained neural network not only provides a maneuvers classification (25), but also gives a probability for each one (252, 253); that is to say that for example, if it has classified a maneuver as a turn event perhaps it has done with a probability of 40% for acceleration maneuver and a 60% for turn maneuver.

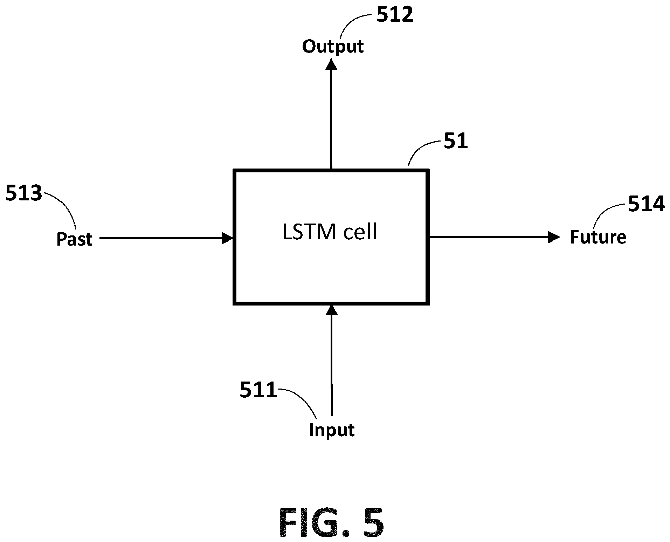

Figure 5 shows a neural network employed by a particular embodiment of present invention. Among the plurality of Deep Learning models, this embodiment of neural networks is known as Long-Short Time Memory (LSTM) (47). LSTM networks are recurrent neural networks which share parameters over time instead of space and have into account the past (513) giving a notion of what happened before recursively. These types of networks are appropriate for time series modeling, as is the case of accelerometer signals. LSTM networks consist of several repetitions of simple units (51) which take as input the past (513) and new inputs (511) producing a new prediction (512) linking to the future (514). Unlike the normal recurrent networks that overwrite their content at each instant of time, LSTM networks can detect an important characteristic at a certain stage and maintain it in the memory being able to acquire that characteristic in an extended time; thus capturing temporary dependencies.

Once the trained neural network has classified the driving maneuvers of a driving journey (43), it is performed a consistency analysis (26) along the driving journey (43). Gyroscopes measure angular velocity of rotation, therefore if a vehicle is taking a large curve with a wide radius and with a non-excessive speed, the measured angular velocity by gyroscopes will be low, even when the vehicle is subjected to a centrifugal force. Consequently gyroscope sensors can be unable to capture long radio turns and when this kind of maneuver is classified (25) by the neural network (24), it could be likely wrongly classified as an acceleration maneuver (252) instead of turn maneuver (253). For this reason among others, an analysis of consistency for successive classification maneuvers (26) is carried out along the journey (43) with the aim of correcting these possible classification errors by the network.

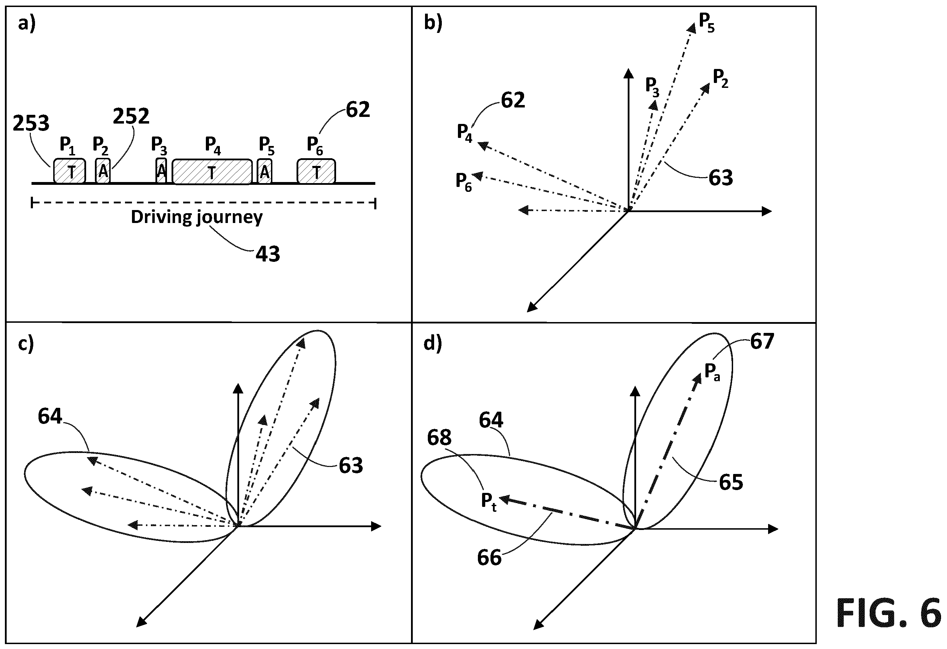

**Figure 6** shows a particular embodiment of the consistency analysis mentioned above. Firstly, once all maneuvers (252,253) along a journey have been characterized and the probabilities (62) that they actually belongs to that group (i.e. accelerations or turns) are obtained by the neural network **(¡Error! No se encuentra el origen de la referencia. 6 part a)**, a direction vector (63) for each maneuver (both accelerations and turns) is calculated using the accelerometer signals. To calculate the direction vector (63), it is necessary to previously subtract the gravity effect (32) from those acceleration values (21) **(¡Error! No se encuentra el origen de la referencia.6 part b)**. Once the direction vectors (63) for each maneuvers have been calculated, they are locally put together by proximity (clustered) (64) **(¡Error! No se encuentra el origen de la referencia.6 part c)**, and a direction vector (65, 66) and a probability (67, 68) for each group is obtained (64) (¡**Error! No se encuentra el origen de la referencia.6 part d**).

According to physics, corresponding vectors to a turn maneuver (66) should be perpendicular to those of acceleration maneuvers (65). So, if the classification has been correct, it should appear a direction (65) for the acceleration maneuvers (252) and another direction (66) approximately perpendicular for the turn maneuvers (253), with their respective probabilities (67, 68). Finally, if a unique result has not been obtained, final probabilities (67, 68) can be used to decide which the correct driving directional vector is, and then using it to re-catalog (27) the erroneous maneuvers.

The aim of the algorithm is to look for vector (63) clusters (64) separated less than a maximum angle, to obtain a final direction vector (66, 67), which represents the average addresses of the clusters (64). Although different implementations can be used, a particular embodiment of the algorithm to group the direction vectors (64) is described below, where two aspects are taken into account, a maximum separation angle between the vectors (63) and the number of vectors (63):

- calculation of the angle is done through scalar product between two vectors. For example, the angle between two vectors $\vec{u}$ and $\vec{v}$ is given by the expression:

$$\cos^{-1}\left(\frac{\vec{u}.\vec{v}}{|\vec{u}|.|\vec{v}|}\right),$$

then, matrix of angles between all vectors must be calculated.

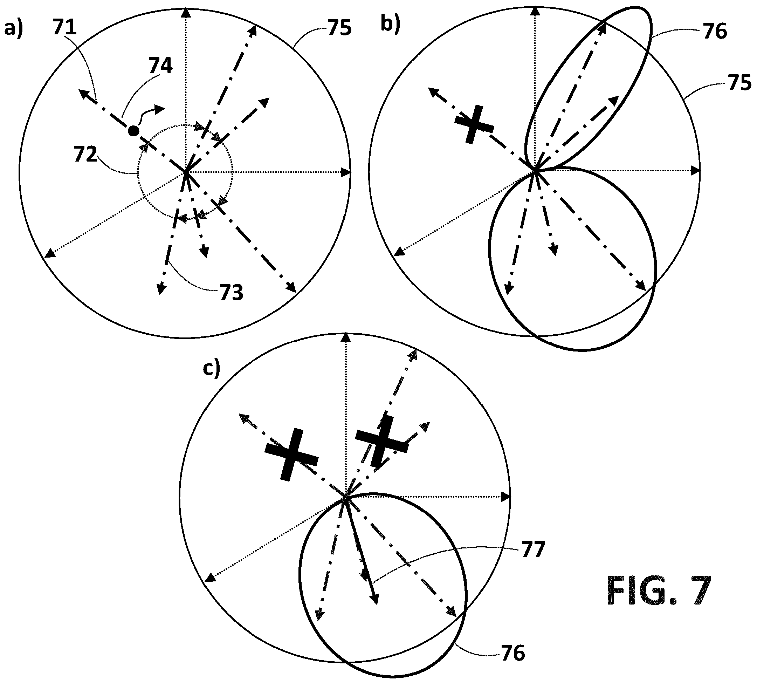

- **Figure 7** shows a 3D sphere which initially contains all the vectors derived from classified driving maneuvers and then, step by step, it ends up providing a final direction. Detailed steps, according to one embodiment of the invention, comprise looking for the vector (71) that has the largest angle (72) of separation with any of the other vectors (73) in this matrix is chosen; this will be the starting point (74) for creating the sphere of minimum values (75). From this vector, a 3D sphere (75) of minimum angles is formed by looking for the closest vector **(¡Error! No se encuentra el origen de la referencia.7 part a**), which generates a path that will go over through all the vectors (73). Taking into account the route of minimum angles (75), vectors are grouped (76) to form clusters of vectors separated less than a maximum angle **(¡Error! No se encuentra el origen de la referencia.7 part b**). Then, for each cluster (76) the number of vectors is counted. The cluster with the biggest number of vectors will be taken as the final cluster and finally, the definitive vector direction (77) will be calculated as mean of all vectors inside that cluster **(¡Error! No se encuentra el origen de la referencia.7 part c**).

The aforementioned feature of grouping vectors in a given cluster is very important, because it will allow re-cataloging maneuvers that were incorrectly classified. Therefore, the final result will be a reliable direction vector consistent with both acceleration and turn maneuvers.

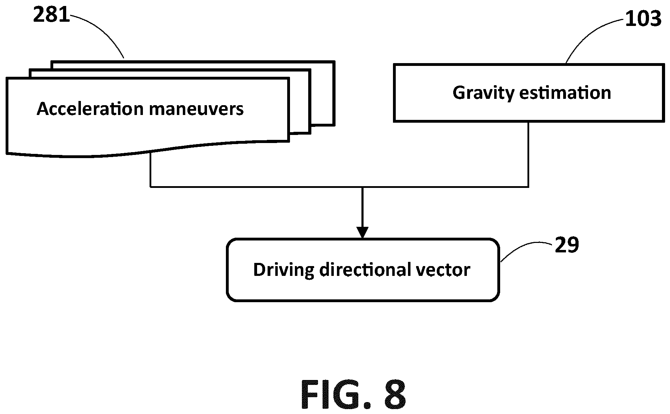

After performing the consistency analysis (26) for each journey (43) and possibly re-cataloging (27) some wrong-classified maneuvers, these final driving maneuvers (28, 281, 282) will be used to calculate the final driving directional vector (29) for each journey (43), providing the vehicle's motion direction. More specifically, this final driving directional vector (29) will be defined by the acceleration maneuvers (281), which have the same direction (66) to movement: whereas turn maneuvers (282) provide a perpendicular direction (68) to movement. As it is shown in **Figure 8**, according to one embodiment of the invention, to calculate the driving directional vector (29) for each driving journey (43), not only final acceleration maneuvers (after re-cataloging) (281) must have been obtained, but also an estimation of the gravity in each driving journey (103) must be calculated. So the steps are as follows:

- Each acceleration maneuver (281) is defined by a different set of tri-axial accelerometer samples and their duration, so the average tri-axial vector will be taken as reference. The mean will be done along the dimension of each axis as:

$$acceleration\ event = mean \begin{bmatrix} a_{x1} & \dots & a_{xn} \\ a_{y1} & \dots & a_{yn} \\ a_{z1} & \dots & a_{zn} \end{bmatrix} =$$

$$\begin{bmatrix} a_x \\ a_y \\ a_z \end{bmatrix} \textbf{Eq. 1}$$

- In total there will be a specific set of acceleration maneuvers (281) for each driving journey (43), which will have been obtained after re-cataloging process (27). The number of this maneuvers will vary depending on how many vectors enter in the final cluster of acceleration maneuvers and also depending on the probabilities of each one maneuver; so specific maneuvers that, despite entering in the final cluster of accelerations, have a low probability of being a true acceleration maneuver can be eliminated. In this way a greater confidence in the results can be achieved.

- For each acceleration maneuver taken in account (281) will be removed the effect of gravity (103).

- Finally, the final driving directional vector (29) is estimated as an average of the set of final acceleration maneuvers, which have been subtracted gravity, as follows:

$$driving\ directional\ vector = mean\left(\begin{bmatrix}a_x\\a_y\\a_z\end{bmatrix}_{all\ acc\ events} - \begin{bmatrix}a_x\\a_y\\a_z\end{bmatrix}_{gravity}\right)\ \textbf{Eq. 2}$$

This final driving directional vector (29) is not only useful because it allows estimating the position of the phone inside the vehicle, but also it allows knowing the vehicle's motion direction. Once it is estimated, it can be used to classify a large number and different type of maneuvers (i.e. roundabouts, potholes). For instance, if the final driving directional vector (29) is obtained, the accelerations maneuvers would have their vector samples pointing to the same direction and the turn maneuvers pointing perpendicular to this; therefore a roundabout is easily recognizable if there is a maneuver with vectors pointing first in the same direction, then perpendicularly and again in the same direction.

According to the description of different embodiments, several advantages are involved by present invention. For example, the propose maneuvers classification method only requires raw tri-axial accelerometer data, without needing a pre-processing of the data. Although different ways of working with the input data are mentioned in the description, this method proposes the use of raw acceleration data directly, doing the implementation simpler and less expensive computationally. Furthermore, present invention does not require a specific placement for the mobile inside the vehicle and no additional hardware is needed, just a mobile phone. The additional equipment not only increases the possible cost, but causes that the driving cannot be natural and comfortable for the driver.

Moreover, the algorithm of present invention only uses smartphone accelerometer sensor and do not need other data such as those provided by the GPS. In consequence, it requires less battery consumption of the phone because of it does not require geopositional information for the maneuvers characterization.

In addition, present invention does not need gyroscope information, which makes it accessible to any range of smartphones, even to a low range. The proposed invention relies of on recent advances on Deep Learning Neural Networks. In particular it can rely on LSTM (Long short term memory), which, unlike a normal recurrent neural networks share parameters over time instead space, collecting better temporal dependencies which may appear along a journey of a driver. Although these networks already appear in other areas such as activity recognition, not many results are found in driving characterization task.

## Claims

1. Method for characterizing a driving event of a vehicle, wherein a tri-axial accelerometer signal is provided by an accelerometer sensor of a mobile communication device located in the vehicle and wherein driving events are detected (23) based on the tri-axial accelerometer signal, the method is **characterized by** comprising the steps of:

a) assigning, by a neural network, a probability that the detected driving event belongs to a certain driving maneuver type from a set of driving maneuver types, based on the tri-axial accelerometer signal;
b) classifying (25) the detected driving event as said certain driving maneuver type from the set of driving maneuver types, according to the probability assigned;
c) obtaining a direction vector associated to each plurality of driving maneuvers of the same type classified from detected driving events within a certain period of time;
d) checking (26) whether the certain driving maneuver type classified on step b) matches with the corresponding direction vector of the plurality of driving maneuvers of said type; and
e) if the certain driving maneuver type does not match with the corresponding direction vector, reclassifying (27) the detected driving event as a different driving maneuver type from the set of driving maneuver types.

2. Method according to claim 1 wherein the set of driving maneuver types comprises acceleration maneuvers (281) and turn maneuvers (282).

3. Method according to any one of previous claims, wherein the neural network is a trained neural network (24), comprising the step of providing the neural network with a database of tri-axial accelerometer signals matching with labeled driving maneuver types.

4. Method according to claim 3, wherein labeling driving maneuver types comprises:

   - obtaining a set of tri-axial accelerometer signals (41) and gyroscope signals (42) associated to a moving vehicle;
   - detecting driving events (44) based on the plurality of accelerometer signals;
   - determining whether the gyroscope signal associated to each detected driving event reaches a previously established energy threshold (451); and
   - labeling each detected driving event as a turn maneuver or as an acceleration maneuver, based on the previous step.

5. Method according to any one of the previous claims, wherein the neural network is a long short time memory network (47).

6. Method according to any one of previous claims wherein obtaining the direction vector associated to each plurality of driving maneuvers of the same type comprises the steps of:

   - obtaining a direction vector (63) for each driving maneuver of the same type based on the tri-axial accelerometer signals provided during a certain period of time;
   - clustering obtained direction vectors based on a certain maximum separation angle; and
   - determining the direction vector associated to each plurality of driving maneuvers of the same type.

7. Method according to claims 2 and 6, wherein determining the direction vector associated to each plurality of driving maneuvers of the same type complies that a direction vector (65) associated to acceleration maneuvers and a direction vector (66) associated to turn maneuvers are perpendicular.

8. Method according to any one of claims 6-7, wherein clustering direction vectors comprises:

   - obtaining all the angles between two direction vectors through scalar product between each direction vector (73) and any other direction vector (73);
   - selecting a direction vector (71) having the largest angle (72);
   - creating a sphere (75) containing all the direction vectors, wherein the selected direction vector is the starting point (74) from which the rest of direction vectors are arranged according to a minimum angle criteria; and
   - clustering (76) direction vectors separated less than a maximum angle previously established.

9. Method according to claim 8 wherein determining the direction vector associated to each plurality of driving maneuvers of the same type comprises:

   - counting the number of direction vectors of each cluster;
   - selecting the cluster having the biggest number of direction vectors; and
   - obtaining the mean (77) of the direction vectors contained in the selected cluster.

10. Method according to claim 2 and 3, wherein a final driving direction vector is obtained by further comprising the steps of:

   - selecting a set of classified and reclassified acceleration maneuvers (281) within a certain period of time;
   - subtracting the effect of gravity (103); and
   - obtaining a final driving direction vector (29) as an average of the selected set of classified and reclassified acceleration maneuvers which have been subtracted the effect of gravity.

11. Method according to any one of the previous claims, wherein the certain period of time for detecting events starts when the vehicle starts moving and it ends when the vehicle stops.

12. Method according to any one of previous claims wherein the triaxial accelerometer signal is a raw accelerometer signal (21).

13. Method according to claim 12 wherein the raw accelerometer signal is processed through at least one of the following techniques: subtracting the effect of the gravity (31) to the raw accelerometer signal; inputting the raw accelerometer signal in a convolutional neural network (34); and adding a signal derived from a virtual gyroscope (36) to the raw accelerometer signal.

14. System with a neural network for characterizing a driving event of a vehicle, the system comprising a mobile communication device with an accelerometer sensor configured for providing a triaxial accelerometer signal, wherein the mobile communication device is configured for detecting driving events based on the tri-axial accelerometer signal; assigning, through the neural network, a probability that the detected driving event belongs to a certain driving maneuver type from a set of driving maneuver types; classifying the detected driving event as said certain driving maneuver type from the set of driving maneuver types, according to the probability assigned; obtaining a direction vector associated to each plurality of driving maneuvers of the same type classified from detected driving events within a certain period of time; checking whether the certain driving maneuver type classified matches with the corresponding direction vector of the plurality of driving maneuvers of said type; and if the certain driving maneuver type does not match with the corresponding direction vector, reclassifying the detected driving event as a different driving maneuver type from the set of driving maneuver types.

15. A computer program product comprising computer program code adapted to perform the method according to any of the claims 1-13 when said program code is executed on a computer, a digital signal processor, a field-programmable gate array, an application-specific integrated circuit, a micro-processor, a micro-controller, or any other form of programmable hardware.

FIG. 1

21 Smartphone raw accelerometer signals

22 Preparation of input data

23 Detection of driving maneuvers

24 Trained neural network

25 Classification of driving maneuvers

251 What kind of maneuver is it?

Accelerations

Turns

252 Acceleration maneuvers and probabilities of correct characterization

253 Turns maneuvers and probabilities of correct characterization

26 Consistency analysis along a driving journey

27 Re-cataloging of maneuvers

28 Final maneuvers

281 Acceleration maneuvers

282 Turn maneuvers

29 Driving directional vector

## FIG. 2

a)

21

3- axial accelerometer $a_x, a_y, a_z$

b)

21

3- axial accelerometer $a_x, a_y, a_z$

32

$a_x, a_y, a_z$

Gravity calculation

32

$G_x, G_y, G_z$

33

$(a_x\text{-}G_x), (a_y\text{-}G_y), (a_z\text{-}G_z)$

c)

21

3- axial accelerometer $a_x, a_y, a_z$

34

Convolutional network

35

Output, local features

d)

21

3- axial accelerometer $a_x, a_y, a_z$

36

3- axial magnetometer $B_x, B_y, B_z$

Virtual gyroscope calculation

$\sqrt{\hat{g}_x^2 + \hat{g}_y^2 + \hat{g}_z^2}$

37

FIG. 3

EP 3 382 570 A1

**FIG. 4**

**512**

Output

**51**

**513**

Past → | LSTM cell | → Future **514**

↑

**511**

Input

# FIG. 5

FIG. 6

EP 3 382 570 A1

a)

71

74

72

75

73

b)

76

75

c)

77

76

FIG. 7

EP 3 382 570 A1

17

281

103

Acceleration maneuvers

Gravity estimation

Driving directional vector

29

# FIG. 8

Europäisches
Patentamt

European
Patent Office

Office européen
des brevets

# EUROPEAN SEARCH REPORT

Application Number

EP 17 38 2150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/206765 A1 (SENTIANCE NV [BE]) 29 December 2016 (2016-12-29) * paragraphs [9], [15], [37], [41], [49], [61], [62], [63], [72] and [73] * ----- | 1-15 | INV. G06F17/18 B60W40/09 B60W40/10 G01P15/00 G06N3/04 H04W4/02 |
| A | SU XING ET AL: "Online Travel Mode Identification Using Smartphones With Battery Saving Considerations", IEEE TRANSACTIONS ON INTELLIGENT TRANSPORTATION SYSTEMS, IEEE, PISCATAWAY, NJ, USA, vol. 17, no. 10, October 2016 (2016-10), pages 2921-2934, XP011624527, ISSN: 1524-9050, DOI: 10.1109/TITS.2016.2530999 [retrieved on 2016-09-30] * the whole document * ----- | 1-15 | |
| A | JAVIER CERVANTES-VILLANUEVA ET AL: "Vehicle Maneuver Detection with Accelerometer-Based Classification", SENSORS, vol. 16, no. 10, 29 September 2016 (2016-09-29), page 1618, XP055415829, DOI: 10.3390/s16101618 * the whole document * ----- | 1-15 | |

TECHNICAL FIELDS
SEARCHED      (IPC)

G06F
B60W
G01P
G06N
H04W

-/--

The present search report has been drawn up for all claims

| Place of search | Date of completion of the search | Examiner |
|---|---|---|
| Berlin | 16 October 2017 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 17 38 2150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SAHA SUBHANJAN ET AL: "TrackMe - a low power location tracking system using smart phone sensors", 2015 INTERNATIONAL CONFERENCE ON COMPUTING AND NETWORK COMMUNICATIONS (COCONET), IEEE, 16 December 2015 (2015-12-16), pages 457-464, XP032866228, DOI: 10.1109/COCONET.2015.7411226 [retrieved on 2016-02-17] * the whole document * | 1-15 | |
| A,D | EP 2 975 867 A1 (TELEFONICA DIGITAL ESPAÑA S L U [ES]) 20 January 2016 (2016-01-20) * the whole document * | 1-15 | |
| A | US 2013/210405 A1 (WHIPPLE JOHN G [US] ET AL) 15 August 2013 (2013-08-15) * the whole document * | 1-15 | |
| A | IL 187 834 A (GREENROAD DRIVING TECHNOLOGIES [IL]) 22 September 2009 (2009-09-22) * the whole document * | 1-15 | TECHNICAL FIELDS SEARCHED (IPC) |

The present search report has been drawn up for all claims

| Place of search | Date of completion of the search | Examiner |
|---|---|---|
| Berlin | 16 October 2017 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 17 38 2150

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2017

| Patent document cited in search report | | Publication date | Patent family member(s) | | Publication date |
|---|---|---|---|---|---|
| WO 2016206765 | A1 | 29-12-2016 | NONE | | |
| EP 2975867 | A1 | 20-01-2016 | EP 2975867 | A1 | 20-01-2016 |
| | | | US 2016016590 | A1 | 21-01-2016 |
| US 2013210405 | A1 | 15-08-2013 | NONE | | |
| IL 187834 | A | 22-09-2009 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2975867 A